# EUROPEAN PATENT APPLICATION

(11) **EP 2 450 670 A1**
(43) Date of publication of application: **09.05.2012**
(21) Application number: 10794153.6
(22) Date of filing: 29.06.2010
(51) Int. Cl.: G01D 5/18

(54) **ROTATION ANGLE DETECTING DEVICE**

(30) Priority: 30.06.2009 JP 2009155598
(71) Applicant: Tomen Electronics Corporation, Tokyo 108-8510 (JP)
(72) Inventor: KURIHARA, Takeo, Kashiwa-shi Chiba 277-0861 (JP)
(74) Representative: Grünecker, Kinkeldey, Stockmair & Schwanhäusser
(86) International application number: PCT/JP2010/061071
(87) International publication number: WO 2011/001984

(57) **Abstract**

The present invention aims for providing a rotation angle detecting device which achieves both the reduction of a manufacturing cost and the elimination of the influence of a reverse magnetic field. A rotating magnet 12 is attached on a rotary shaft 11 and generates a rotating magnetic field by rotating together with the rotary shaft 11. A rotation angle detecting element unit 13 includes a magnetic detecting element and a quadrupole auxiliary magnet 160. The quadrupole auxiliary magnet 160 includes plural first pole pieces 161a to 161d arranged radially. Second pole pieces 162a and 162b are inserted between the first pole pieces 161a to 161d. The second pole pieces 162a and 162b erase a reverse magnetic field directed to a reverse direction of a composite magnetic field generated by the first pole pieces 161a to 161d.

## Description

### TECHNICAL FIELD

The present invention relates to a rotation angle detecting device which detects a rotation angle of a detecting target magnet by using a magnetic detecting element.

### BACKGROUND ART

A contactless rotation angle detecting device using a magnetic detecting element, which is used for detecting a rotation angle of a detecting target such as a rotary shaft, etc., is made known by, for example, Patent Document 1 previously filed by the present applicant. The rotation angle detecting device of Patent Document 1 includes a rotating magnet attached to a rotating target, a quadrupole auxiliary magnet mounted on a substrate located at a position facing the rotating magnet, and a magnetic detecting element mounted on the opposite side of the substrate. The quadrupole auxiliary magnet has a function of converting a rotating magnetic field of 0 to 360 degrees caused by the rotating magnet to a rotating magnetic field of 0 to 180 degrees, and thereby makes it possible to detect 0 to 360-degree rotations.

The quadrupole auxiliary magnet is magnetized in two directions orthogonal to each other (0 degree and 90 degrees), and is configured to cause a composite magnetic moment thereof to be directed to the 45-degree direction, which is the direction of the axis of easy magnetization of the magnetic detecting element. However, there exists a magnetic field directed to a reverse direction (a reverse magnetic field) at an end of the quadrupole auxiliary magnet, and it is necessary to remove the reverse magnetic field in order to detect a rotation angle accurately. To remove the reverse magnetic field, after a quadrupole auxiliary magnet is formed, a step of generating a magnetic field in the 45-degree direction and removing the reverse magnetic field of the generated magnetic field is required. This will lead to an increase in the number of steps, and to a problem that the manufacturing cost will increase. Such a problem occurs not only when a quadrupole auxiliary magnet is used but also when a multipolar magnet having any other number of poles is used.

### CONVENTIONAL ART DOCUMENT

### PATENT DOCUMENT

Patent Document 1: JP2007-24738A

### SUMMARY OF THE INVENTION

### PROBLEM TO BE SOLVED BY THE INVENTION

An object of the present invention is to provide a rotation angle detecting device which achieves both the reduction of a manufacturing cost and the elimination of the influence of a reverse magnetic field.

### MEANS FOR SOLVING THE PROBLEM

A rotation angle detecting device according to one aspect of the present invention comprises: a rotating magnet attached on a detecting target and operative to rotate together with the detecting target to generate a rotating magnetic field; a magnetic detecting element disposed in the rotating magnetic field generated by the rotating magnet; and a multipolar auxiliary magnet located near the magnetic detecting element and configured to generate a composite rotating magnetic field of 0 to x degrees (x≤180) from a rotating magnetic field of 0 to 360 degrees caused by the rotating magnet in a region where the magnetic detecting element is disposed. The multipolar auxiliary magnet includes: a plurality of first pole pieces arranged radially; and second pole pieces inserted between the first pole pieces for erasing a reverse magnetic field aligned in a reverse direction from a composite magnetic field directed to a reverse direction of a composite magnetic field obtained by combining magnetic fields each generated by the plurality of first pole pieces.

### EFFECT OF THE INVENTION

According to the present invention, it is possible to provide a rotation angle detecting device which achieves both the reduction of a manufacturing cost and the elimination of the influence of a reverse magnetic field.

### BRIEF DESCRIPTION OF THE DRAWINGS

[Fig. 1] Fig. 1 is a side elevation showing the configuration of a rotation angle detecting device 100 according to a first embodiment of the present invention.
[Fig. 2A] Fig. 2A is a plan view of a quadrupole auxiliary magnet 160 included in the rotation angle detecting device of Fig. 1.
[Fig. 2B] Fig. 2B is a plan view showing another example of quadrupole auxiliary magnet 160 included in the rotation angle detecting device of Fig. 1.
[Fig. 2C] Fig. 2C is a pan view showing another example of quadrupole auxiliary magnet 160 included in the rotation angle detecting device of Fig. 1.
[Fig. 2D] Fig. 2D is a plan view showing another example of quadrupole auxiliary magnet 160 included in the rotation angle detecting device of Fig. 1.
[Fig. 2E] Fig. 2E is a plan view showing another example of quadrupole auxiliary magnet 160 included in the rotation angle detecting device of Fig. 1.
[Fig. 3] Fig. 3 is a magnetic field line diagram explaining the appearance of a magnetic field generated when there are no demagnetizing magnet section 162 (second pole pieces 162a and 162b) of Figs. 2A to 2E.
[Fig. 4] Fig. 4 shows one example of a specific configuration of the quadrupole auxiliary magnet 160 of Fig. 2A.
[Fig. 5] Fig. 5 shows an element solution of the magnetic field formed by the quadrupole auxiliary magnet 160 of Fig. 2A obtained by Finite Element Analysis.
[Fig. 6] Fig. 6 explains the configuration of an octupole auxiliary magnet 160a used in a rotation angle detecting device according to a second embodiment of the present invention.
[Fig. 7] Fig. 7 explains the configuration of a sixteen-pole auxiliary magnet 160b used in a rotation angle detecting device according to a third embodiment of the present invention.
[Fig. 8] Fig. 8 explains the configuration of a sextupole auxiliary magnet 160c used in a rotation angle detecting device according to a fourth embodiment of the present invention.
[Fig. 9] Fig. 9 shows an applied example of the embodiments of the present invention.
[Fig. 10] Fig. 10 shows an applied example of the embodiments of the present invention.
[Fig. 11] Fig. 11 shows an example of configuration when a GMR sensor is used as a magnetic detecting element in the rotation angle detecting element unit 13.

### BEST MODE FOR CARRYING OUT THE INVENTION

The embodiments of the present invention will now be explained with reference to the attached drawings.

### [First Embodiment]

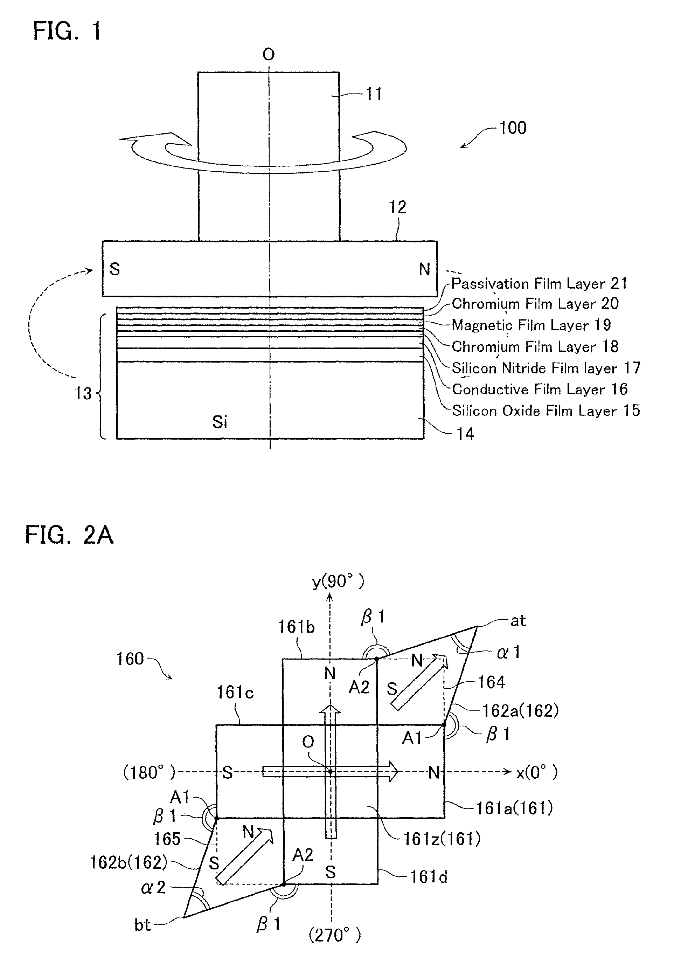

Fig. 1 is a side elevation showing the configuration of a rotation angle detecting device 100 according to the first embodiment of the present invention. Fig. 2A is a plan view of a quadrupole auxiliary magnet 160 as one example of multipolar auxiliary magnet included in the rotation angle detecting device 100. The rotation angle detecting device 100 is configured to detect a rotation angle of, for example, a rotary shaft 11 of an assist motor of an electric power steering device of an automobile. A rotating magnet 12 is attached to an end of the rotary shaft 11. A rotation angle detecting element unit 13 is provided to face the rotating magnet 12 contactlessly. The rotation angle detecting device 100 is configured by the rotating magnet 12 and the rotation angle detecting element unit 13.
The rotating magnet 12 is formed of a rectangular solid, and is a bipolar permanent magnet of which longer-direction both ends are the poles. In this example, the rotating magnet 12 is attached to an end of the rotary shaft 11 with its longer direction aligned in a direction perpendicular to the longer direction of the rotary shaft 11.

The rotation angle detecting element unit 13 internally includes a magnetic detecting element for magnetically detecting a rotation of the rotary shaft 11, and the quadrupole auxiliary magnet mentioned above. Namely, the rotation angle detecting element unit 13 of Fig.1 includes a silicon substrate 14, a silicon oxide film layer 15 (SiO₂), a conductive film layer 16, a silicon nitride film layer 17 (SiNₓ), a chromium film layer 18 (Cr), a magnetic film layer 19, a chromium film layer 20 (Cr), and a passivation film 21 (a silicon nitride film layer). In this example, it is assumed that an AMR effect element (an Aisotropic Magnetoresistive Sensor) is formed as one example of the magnetic detecting element. The AMR effect element exists in a rotating magnetic field generated by the rotating magnet 12, and outputs a signal corresponding to the rotation angle of the rotating magnet 12. The present invention is not limited to the AMR effect element, but the rotation angle detecting element 13 may include a magnetoresistive effect element such as a GMR sensor, a TMR sensor, a CMR sensor, etc. instead of the AMR effect element. What type of magnetic detecting element is to be used is not directly relevant to the essential part of the present invention. Since these magnetic detecting elements have different rotation detectable ranges, sensitivities, detecting accuracies, and resolutions, it is rational to employ the most appropriate magnetic detecting element depending on the rotation detectable range, sensitivity, detecting accuracy, and resolution that are required.
The example of Fig. 1 is one in which the magnetic detecting element and the quadrupole auxiliary magnet are monolithically formed above the silicon substrate 14. However, they may be formed of discrete elements and mounted on a printed board. The rotation angle detecting element unit may be configured in this way.

The magnetic film layer 19 is a layer in which the quadrupole auxiliary magnet 160 is formed as shown in Fig. 2A. It is made of a ferromagnetic material such as samarium (Sm), cobalt (Co), etc.. The magnetic film layer 19 is fixedly magnetized in a certain direction. A fixed magnetic moment provided by the quadrupole auxiliary magnet 160 and a magnetic moment provided by the rotating magnet 12 are synthesized, thereby a composite magnetic moment being provided. The direction of the composite magnetic moment changes as the rotating magnet 12 rotates.
The conductive film layer 16 is a layer constituting the magnetic detecting element, and made of a ferromagnetic material such as permalloy (an alloy of Ni:Fe=81:19) that is bridge-connected. When the direction of the composite magnetic moment described above changes as the rotating magnet 12 rotates, the magnetic resistance of a magnetoresistive element bridge-connected in the magnetic detecting element changes. The rotation angle of the rotating magnet 12 is detected by detecting this change in the magnetic resistance. Note that this kind of bridge connection is well-known and also described in Patent Document identified above. Hence, explanation about bridge connection will not be provided.

The chromium film layers 18 and 20 are formed to sandwich the magnetic film layer 19 from above and below, and serve to prevent oxidation of samarium (Sm) of the magnetic film layer 19. The passivation film 21 is made of, for example, silicon nitride film (SiNₓ), and serves to protect the chromium film layer 20.

The quadrupole auxiliary magnet 160 (one example of multipolar auxiliary magnet) formed in the magnetic film layer 19 and arranged closely to the AMR effect detecting element in the conductive film layer 16 is a cruciformmagnet substantially coaxial with the rotary shaft 11, and magnetized to form magnetic fields in 0-degree and 90-degree directions with respect to a horizontal line (x axis: reference direction) passing the rotation center 0 of the rotary shaft 11. A composite magnetic field formed by synthesizing these magnetic fields in the 0-degree and 90-degree directions is directed to the 45-degree direction with respect to the reference direction (x axis) . The quadrupole auxiliary magnet 160 has a function of converting 0-degree to 360-degree rotations of the rotating magnet 12 to 0-degree to 180-degree rotations thereof. That is, when the rotating magnet 12 rotates in the rage of 360 degrees, the direction of the composite magnetic field composed of the magnetic field generated by the rotating magnet 12 and the magnetic field generated by the quadrupole auxiliary magnet 16 changes in the range of 180 degrees. By detecting this change by means of the magnetic detecting element, for example, an AMR effect detecting element, it is possible to detect the amount of rotation of the rotary shaft 11. This detection principle is explained in detail in Patent Document identified above, and will not hence be explained in detail.

Next, the details of the configuration of the quadrupole auxiliary magnet 160 will be explained with reference to Fig. 2A. The quadrupole auxiliary magnet 160 includes a radial magnet section 161 and a demagnetizing magnet section 162.

The radial magnet section 161 includes first pole pieces 161a to 161d, and a ferromagnetic material section 161z. The ferromagnetic material section 161z is positioned in the center of the radial magnet section 161, and specifically, disposed such that its center substantially coincides with the rotation center 0 of the rotary shaft 11. The ferromagnetic material section 161z is made of, for example, iron (Fe) or the like.

The first pole pieces 161a to 161d are arranged radially at 90-degree intervals such that each contacts one of the four sides of the ferromagnetic material section 161z. That is, the first pole piece 161a is disposed in the positive direction of the x-axis (0-degree direction) as seen from the rotation center O. The first pole piece 161b is disposed in the positive direction of the y-axis (90-degree direction) as seen from the rotation center O. The first pole piece 161c is disposed in the negative direction of the x-axis (180-degree direction) as seen from the rotation center O. The first pole piece 161d is disposed in the negative direction of the y-axis (270-degree direction) as seen from the rotation center O.

The radial magnet section 161 is magnetized to form magnetic fields in the x-axis direction (0-degree direction) and in the y-axis direction (90-degree direction). Therefore, the first pole pieces 161a and 161b are magnetized to have an N pole at their radial-direction end and an S pole at their opposite end. Conversely, the first pole pieces 161c and 161d are magnetized to have an S pole at their radial-direction end and an N pole at their opposite end. Hence, a composite magnetic field obtained by synthesizing magnetic fields each caused by either one of four first pole pieces 161a to 161d is a magnetic field directed to the 45-degree direction with respect to the x-axis.

The demagnetizing magnet section 162 includes two second pole pieces 162a and 162b. The second pole piece 162a is formed in a first quadrangular region 164 sandwiched between the first pole pieces 161a and 161b (a region defined by imaginary lines extended from the outline of the first magnet section 161a and the outline of the first magnet section 161b), and in this example, has a substantially rhomboid shape. The second pole piece 162a is magnetized along a 45-degree direction with respect to the x-axis. This gives the second pole piece 162a a function of erasing a reverse magnetic field directed to the reverse direction of the composite magnetic field obtained by synthesizing the magnetic fields each generated by eigher one of the first pole pieces 161a to 161d. It is preferable that the vertex farthest from the rotation center 0 have an acute angle α (<90°) and be at a position outi of the first quadrangular region 164.

The second pole piece 162b is formed in a second quadrangular region 165 sandwiched between the first pole pieces 161c and 161d (a region defined by imaginary lines extended from the outline of the first pole piece 161c and the outline of the first pole piece 161d). Like the second pole piece 162a, the second pole piece 162b is magnetized along a 45-degree direction with respect to the x-axis in order to erase the reverse magnetic field described above. It is preferrable that the vertex farthest from the rotation center O have an acute angle α (<90°) and be at a position out of the second quadrangular region 165.

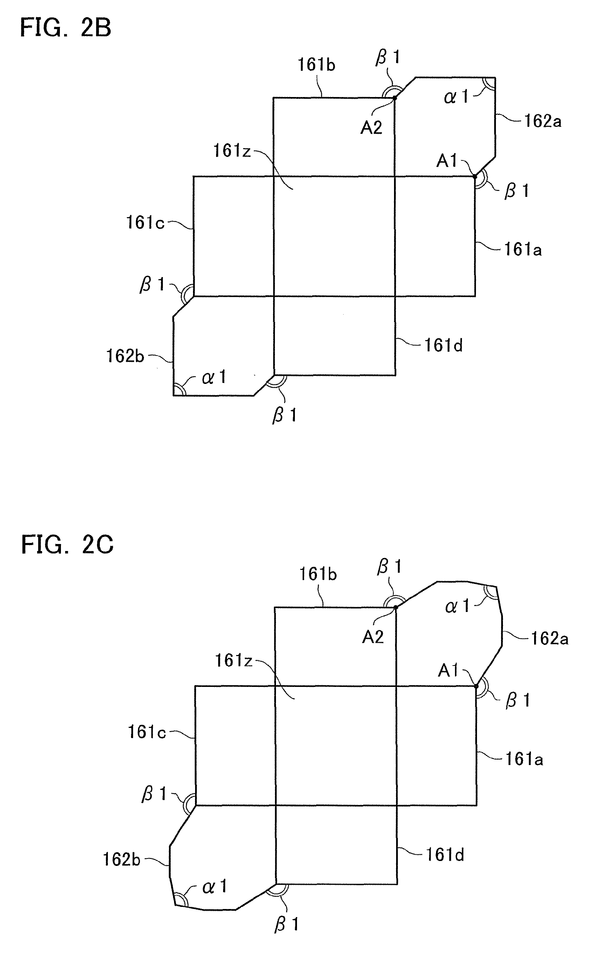

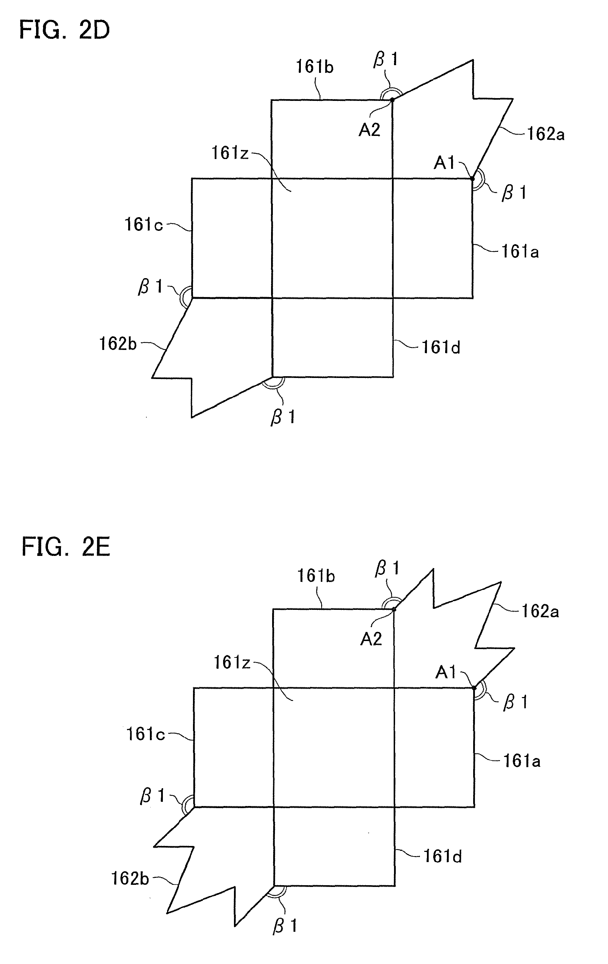

The presence of these second pole pieces 162a and 162b enables undesirable magnetic field lines (reverse magnetic field) generated by the radial magnet section 161 to be erased. The second pole pieces 162a and 162b are formed to be each sandwiched between the first pole pieces 161a to 161d whose outer ends are magnetized in the same direction. In the case of Fig. 2A, the second pole piece 162a is formed to be sandwiched between the first pole pieces 161a and 161b magnetized such that their outer ends have an N pole, while the second pole piece 162b is formed to be sandwiched between the first pole pieces 161c and 161d magnetized such that their outer ends have an S pole. It is preferable that each of the second pole pieces 162a and 162b be formed to have substantially the same area as each of the first pole pieces 161a to 161d (provided that they are formed to have the same configuration and made of the same material). This is because if they have greatly different areas, the reverse magnetic field will not be erased sufficiently. It is preferable that the vertices A1 and A2 of the second pole pieces 162a and 162b substantially coincide with outer vertices of the first pole pieces 161a and 161b (coinciding in this way will hereinafter be referred to as crossing at one point) . This is because if their vertices do not coincide, the reverse magnetic field will not be erased sufficiently. Hence, the margin of error between the positions of their vertices is restricted to approximately ±1 µm.
Further, it is preferable that an angle β1 formed between a side of the first pole pieces 161a to 161d at the outer end thereof and a side of the second pole pieces 162a and 162b adjoining that side be set to an obtuse angle (>90°). This is because an acute angle formed at this portion will lead to disadvantages such as increase in the reverse magnetic field as an opposite effect.
As can be understood from the above, it is preferable that the second pole pieces 162a and 162b be formed to satisfy the following three conditions (1) to (3). Particularly, the conditions (1) and (3) are strongly demanded from the viewpoint of erasing the reverse magnetic field and improving the detecting accuracy.
(1) Each one of the second pole pieces 162a and 162b has substantially the same area as each one of the first pole pieces 161a to 161d.
(2) The vertices A1 and A2 of the second pole pieces 162a and 162b substantially coincide with the outer vertices of the first pole pieces 161a to 161d.
(3) The angle β1 is an obtuse angle.
As long as the two conditions (1) and (3) or desirably all of the conditions (1) to (3) described above are satisfied, second pole pieces 162a and 162b having any shape can be used. For example, they may have a hexagonal shape as shown in Fig. 2B. Alternatively, they may have an octagonal shape as shown in Fig. 2C. Yet alternatively, they need not have a polygonal shape, but may have a "spork" shape as shown in Fig. 2D. Still alternatively, they may have a maple leaf shape as shown in Fig. 2E.

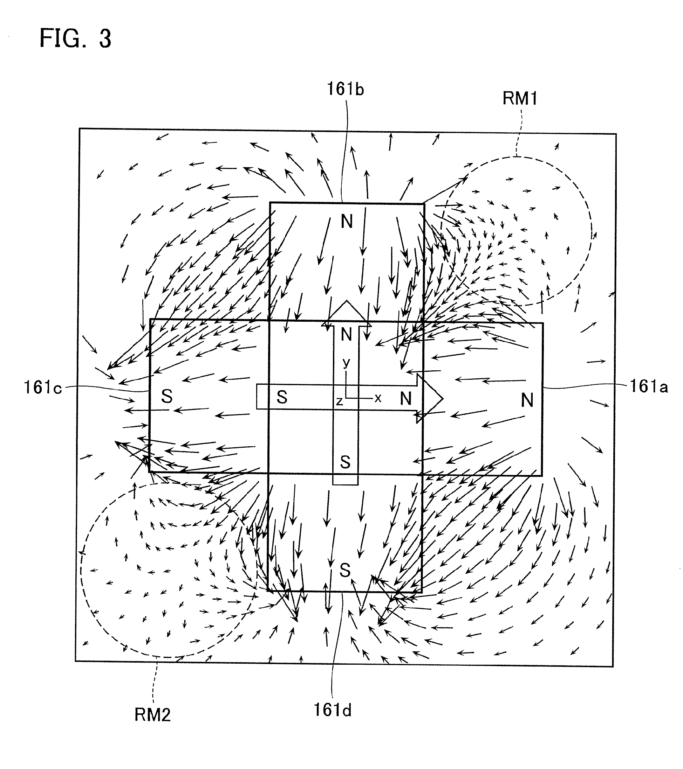

As shown in Fig. 3, if the demagnetizing magnet section 162 (second pole pieces 162a and 162b) is not present, there arises reverse magnetic fields (the symbols RM1 and RM2 of Fig. 3) directed to the reverse direction of the composite magnetic field formed by the radial magnet section 161 in the vicinity of the first quadrangular region 164 and second quadrangular region 165. This may be an obstacle to accurate detection of the rotation angle of the rotary shaft 11. In order to erase such reverse magnetic fields, it is possible to implement a step of generating a magnetic field in the 45-degree direction as seen from the X-axis. However, implementing such a step would increase an error in a detected angle and also the manufacturing cost of the quadrupole auxiliary magnet.

On the other hand, according to the quadrupole auxiliary magnet 160 of the present embodiment, the reverse magnetic fields will be erased by the second pole pieces 162a and 162b magnetized in the 45-degree direction. Hence, it is possible to detect an accurate rotation angle of the rotary shaft 11. In addition, the second pole pieces 162a and 162b having such a direction of magnetization can be formed easily by a semiconductor fabrication process. Hence, the quadrupole auxiliary magnet 160 with no reversed magnetization can be formed at a favorable yield at a low cost.

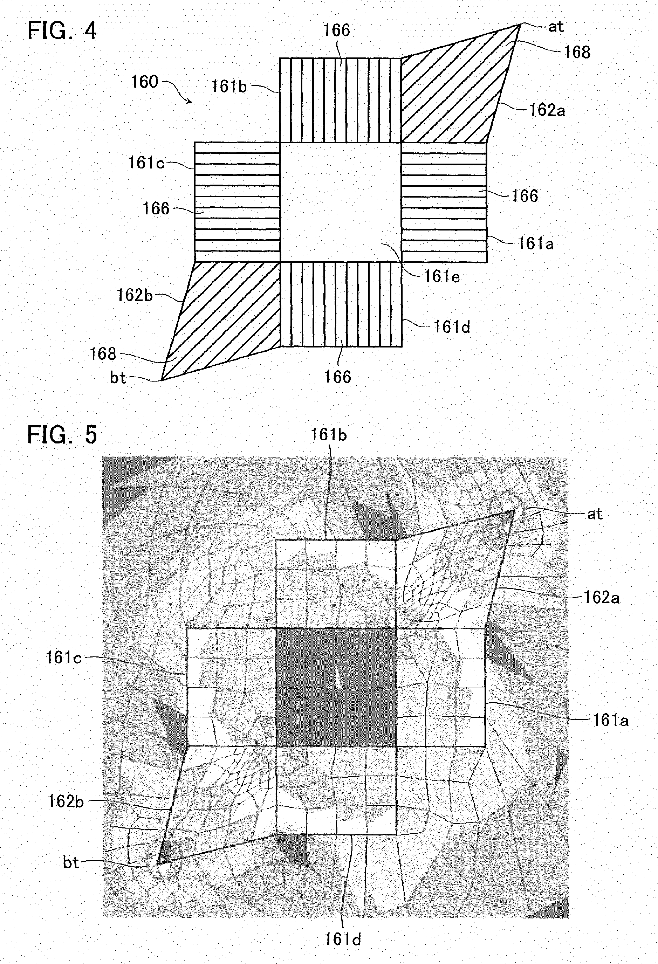

Fig. 4 is one example of specific configuration of the quadrupole auxiliary magnet 160 of Fig. 2A. In the quadrupole auxiliary magnet 160 of Fig. 4, the first pole pieces 161a to 161d are each formed of a plurality of magnet thin film layers 166 made of rare-earth magnet such as samarium-cobalt magnet, etc. The magnet thin film layers 166 are formed in a stripe shape having its longer direction along the directions of the sides of the cruciform of the radial magnet section 161, and have their axis of easy magnetization in 0-degree and 90-degree directions. The demagnetizing magnet section 162 (the second pole pieces 162a and 162b) is formed of a plurality of stripe-shaped magnet thin film layers 168 made of rare-earth magnet and having their longer direction along the 45-degree direction with respect to the x-axis. Hence, their axis of easy magnetization is also in the 45-degree direction. Such magnet thin film layers 166 and 168 can be implemented easily by a well-known semiconductor fabrication process, and can be magnetized in a desired direction more accurately than when such a magnetizing process as described above is implemented, and can be prevented from generating any reverse magnetic fields.

The width of the stripes of the magnetic thin film layers 166 and 168 and the interval (space) between the stripes are roughly about 1 µm, though they vary according to the material of the magnetic thin film layers and a semiconductor manufacturing device. When the magnetic field strength is insufficient, the magnet thin film layers 166 and 168 may be stacked to form a plurality of layers. Needless to say, the quadrupole auxiliary magnet shown in Figs. 2B to 2E may be formed in the same way, though not illustrated. A multipolar auxiliary magnet according to another embodiment to be described later may also be formed in the same way.

It is preferable that the second pole pieces 162a and 162b of the present embodiment have acute angles α1 and α2 at their radial-direction ends at and bt. This can help improve the demagnetizing ability of the second pole pieces 162a and 162b. Fig. 5 shows a result of a simulation of a magnetic field formed by the quadrupole auxiliary magnet 160 shown in Fig. 2A. As is clear from Fig. 5, since the second pole pieces 162a and 162b have acute angles at their ends at and bt, concentration of magnetic field lines to the ends at and bt can be avoided. That is, the reverse magnetic fields described above are erased sufficiently.

### [Second Embodiment]

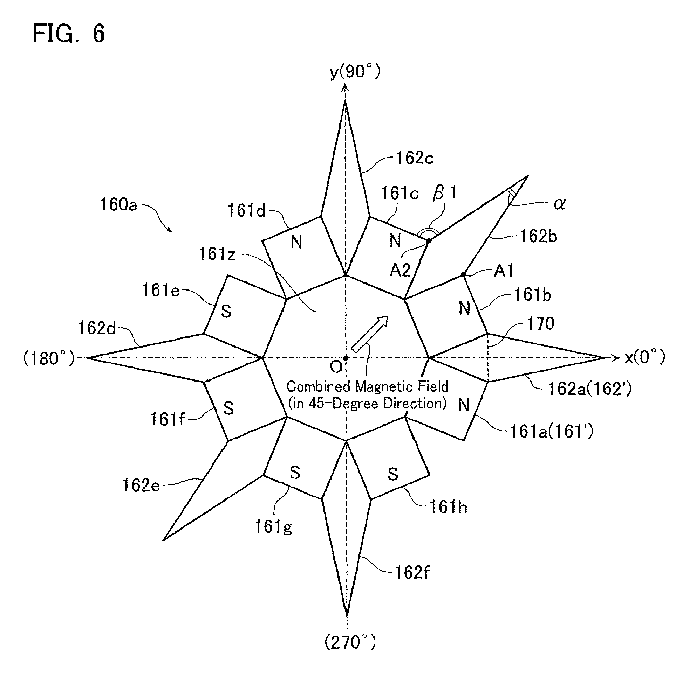

Next, a rotation angle detecting device according to the second embodiment of the present invention will be explained with reference to Fig. 6. The overall configuration of the rotation angle detecting device according to the second embodiment is the same as the first embodiment (Fig. 1). However, the present embodiment is different from the first embodiment in that it includes an octupole auxiliary magnet 160a as shown in Fig. 6 instead of the quadrupole auxiliary magnet of Figs. 2A to 2E. The octupole auxiliary magnet 160a has a function of converting a rotating magnetic field of 0 to 360 degrees caused by the rotating magnet 12 to a rotating magnetic field of 0 to 90 degrees.
Since the second embodiment is the same as the first embodiment in the other respects, explanation on any portions that are common will not be provided below.

Next, the details of the configuration of the octupole auxiliary magnet 160a will be explained with reference to Fig. 6. The octupole auxiliary magnet 160a includes a radial magnet section 161' and a demagnetizing magnet section 162'.

The radial magnet section 161' includes first pole pieces 161a to 161h, and a ferromagnetic material section 161z. The radial magnet section 161' is different from the radial magnet section 161 of the first embodiment in the number of first pole pieces 161a to 161h (= eight) and the shape of the second pole piece 161 z (= octagonal), but may be made of the same material as the first embodiment.

The eight first pole pieces 161a to 161h are arranged radially at 45-degree intervals so as to each contact one of the eight sides of the ferromagnetic material section 161z. Continuous four first pole pieces 161a to 161d are magnetized in the radial direction and such that their radial-direction ends are magnetized to an N pole. On the other hand, the remaining four first pole pieces 161e to 161h are magnetized in the radial direction and such that their radial-direction ends are magnetized to an S pole. The present embodiment is the same as the first embodiment (Figs. 2A to 2E) in that half of the plurality of first pole pieces 161 are magnetized to have an N pole at their ends and the remaining half are magnetized to have an S pole at their ends. By being magnetized in this way, the radial magnet section 161' forms a composite magnetic field in the 45-dgree direction with respect to a reference axis as in the first embodiment.

The demagnetizing magnet section 162' includes six second pole pieces 162a to 162f. The second pole pieces 162a to 162c are formed in sectoral regions 170 between the first pole pieces 161a to 161d. The second pole pieces 162a to 162c are magnetized in their radial directions such that a composite magnetic field of the magnetic fields caused by themselves is aligned in the 45-degree direction. In this way, they erase a reverse magnetic field aligned in the reverse direction from the composite magnetic field generated by the first pole pieces 161a to 161h.

The second pole pieces 162d to 162f are formed in sectoral regions 170 between the first pole pieces 161e to 161h. The second pole pieces 162d to 162f are magnetized in their radial directions such that a composite magnetic field of the magnetic fields caused by themselves is aligned in the 45-degree direction. In this way, they erase a reverse magnetic field directed to the reverse direction of the composite magnetic field generated by the first pole pieces 161a to 161h. The radial-direction-side vertices of the respective second pole pieces 162a to 162f have acute angles as in the first embodiment.

The octupole auxiliary magnet 160a also has the second pole pieces 162a to 162f in the regions between the first pole pieces 160a to 160h, and can thereby erase a reverse magnetic field of the composite magnetic field generated by the first pole pieces 160a to 160h. In this regard, the present embodiment can be said to have the same effect as the first embodiment. The use of the octupole auxiliary magnet 160a leads to a wider rotation detectable range than that obtained by the use of the quadrupole auxiliary magnet 160 of the first embodiment. For example, in the first embodiment, the rotation detectable range of the device by means of the combination of the quadrupole auxiliary magnet 160 and the AMR effect detecting element is 360 degrees whereas when the quadrupole auxiliary magnet 160 is replaced by the octupole auxiliary magnet 160a, the rotation detectable range can be widened to 720 degrees even if the AMR effect detecting element is used. If a GMR sensor is used instead of the AMR effect detecting element and combined with the octupole auxiliary magnet 160a, the rotation detectable range will be 1440 degrees.
It is preferable that the octupole auxiliary magnet 160a also satisfy the following three conditions like the quadrupole auxiliary magnet 160.
(1) Each one of the second pole pieces 162a to 162f have substantially the same area as each one of the first pole pieces 161a to 161h.
(2) The vertices A1 and A2 of the second pole pieces 162a to 162f substantially coincide with the outer vertices of the first pole pieces 161a to 161h.
(3) The angle β1 is an obtuse angle.

### [Third Embodiment]

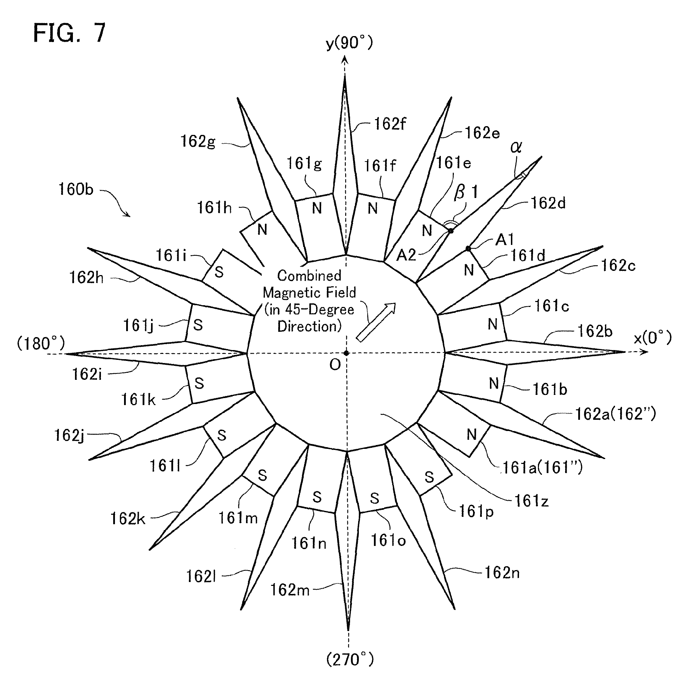

Next, a rotation angle detecting device according to the third embodiment of the present invention will be explained with reference to Fig. 7. The overall configuration of the rotation angle detecting device according to the third embodiment is the same as the first embodiment (Fig. 1). However, the present embodiment is different from the embodiment described above in that it includes a sixteen-pole auxiliary magnet 160b as shown in Fig. 7 as a multipolar auxiliary magnet. The sixteen-pole auxiliary magnet 160b has a function of converting a rotating magnetic field of 0 to 360 degrees caused by the rotating magnet to a rotating magnetic field of 0 to 45 degrees. Since the present embodiment is the same as the first embodiment in any other respects, explanation on any portions that are common will not be provided below.

Next, the details of the configuration of the sixteen-pole auxiliary magnet 160b will be explained with reference to Fig. 7. The sixteen-pole auxiliary magnet 160b includes a radial magnet section 161" and a demagnetizing magnet section 162".

The radial magnet section 161" includes sixteen first pole pieces 161a to 161p, and a ferromagnetic material section 161z. The present embodiment is only different from the first embodiment in the number of first pole pieces 161a to 161p (= sixteen) and the shape of the second pole piece 161z (= hexadecagonal), and the same in any other respects. The sixteen first pole pieces 161a to 161p are arranged radially at 22.5-degree intervals so as to each contact one side of the ferromagnetic material section 161z. Continuous eight first pole pieces 161a to 161h are magnetized in the radial direction and such that their radial-direction ends are magnetized to an N pole. On the other hand, the remaining eight first pole pieces 161i to 161p are magnetized in the radial direction and such that their radial-direction ends are magnetized to an S pole. The present embodiment is the same as the embodiments described above (Figs. 2A to 2E, and Fig. 6) in that half of the plurality of first pole pieces 161 are magnetized to have an N pole at their ends, and the remaining half are magnetized to have an S pole at their ends. By being magnetized in this way, the radial magnet section 161" forms a composite magnetic field in the 45-degree direction with respect to a reference axis, as in the first embodiment.

The demagnetizing magnet section 162" includes fourteen second pole pieces 162a to 162n. The second pole pieces 162a to 162g are formed in sectoral regions between the first pole pieces 161a to 161h respectively. The second pole pieces 162a to 162g are magnetized in their radial directions such that the composite magnetic field of the magnetic fields caused by themselves is aligned in the 45-degree direction. In this way, they erase a reverse magnetic field directed to the reverse direction of the composite magnetic field generated by the first pole pieces 161a to 161p.

The second pole pieces 162h to 162n are formed in sectroal regions between the first pole pieces 161i to 161p respectively. The second pole pieces 162h to 162n are magnetized in their radial directions such that the composite magnetic field of the magnetic fields caused by themselves is aligned in 45-degree direction. In this way, they erase a reverse magnetic field directed to the reverse direction of the composite magnetic field generated by the first pole pieces 161a to 161p. The radial-direction-side vertices of the respective second pole pieces 162a to 162n have acute angles as in the first embodiment.

The sixteen-pole auxiliary magnet 160b also includes the second pole pieces 162a to 162n in the regions between the first pole pieces 160a to 160p like the multipolar auxiliary magnet described above, and can thereby erase the reverse magnetic field of the composite magnetic field generated by the first pole pieces 160a to 160p. In this regard, the present embodiment can be said to have the same effect as the embodiments described above. The sixteen-pole auxiliary magnet 160b can provide a rotation detectable range that is four times wider than that provided by the quadrupole auxiliary magnet 160, provided that the same magnetic detecting element is used. It is preferable that the sixteen-pole auxiliary magnet 160b also satisfy the following three conditions like the quadrupole auxiliary magnet 160.
(1) Each one of the second pole pieces 162a to 162h has substantially the same area as each one of the first pole pieces 161a to 161p.
(2) The vertices A1 and A2 of the second pole pieces 162a to 162n substantially coincide with the outer vertices of the first pole pieces 161a to 161h.
(3) The angle β1 is an obtuse angle.

### [Fourth Embodiment]

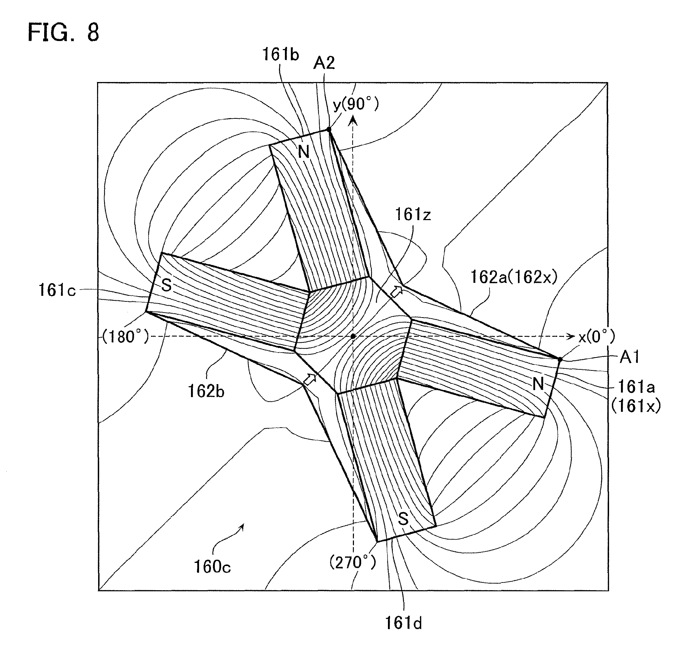

Next, a rotation angle detecting device according to the fourth embodiment of the present invention will be explained with reference to Fig. 8. The overall configuration of the rotation angle detecting device according to the fourth embodiment is the same as the first embodiment (Fig. 1). However, the present embodiment is different from the embodiment described above in that it includes a sextupole auxiliary magnet 160c as shown in Fig. 8 as the multipolar auxiliary magnet. Since the present embodiment is the same as the first embodiment in the other respects, explanation on any portions that are common will not be provided below.

Next, the details of the configuration of the sextupole auxiliary magnet 160c will be explained with reference to Fig. 8. The sextupole auxiliary magnet 160c includes a radial magnet section 161x and a demagnetizing magnet section 162x.

The radial magnet section 161x includes four first pole pieces 161a to 161d, and a ferromagnetic material section 161z. The ferromagnetic material section 161z has a hexagonal shape, and the fourth first pole pieces 161a to 161d are arranged radially along four of the sides of the hexagonal shape. Provided on the remaining two opposite sides are second pole pieces 162a and 162b. The second pole pieces 162a and 162b function as the demagnetizing magnet section 162x, and also as the radial magnet section 161x. The total of six pole pieces, namely the four first pole pieces 161a to 161d and the two second pole pieces 162a and 162z form the radial magnet section 161x, and hence constitute the sextupole auxiliary magnet. In this way, the fourth embodiment uses a multipolar auxiliary magnet of which number of poles is six (= a multiple of two), which is different from the embodiments described above which use a multipolar auxiliary magnet of which number of poles is a power of two.

The first pole pieces 161a and 161b are magnetized in the radial direction and such that their radial-direction ends are magnetized to an N pole. The second pole pieces 162a is magnetized in the 45-degree direction shown in Fig. 8 and such that it has an N pole in its radial direction. The first pole pieces 161a and 161b and the second pole piece 162a are magnetized to form a composite magnetic field aligned in the 45-degree direction as a whole.

On the other hand, the first pole pieces 161c and 161d are magnetized in the radial direction and such that their radial-direction ends are magnetized to an S pole. The second pole piece 162b is magnetized in the 45-degree direction shown in Fig. 8 and such that it has an S pole in its radial direction. The first pole pieces 161c and 161d and the second pole piece 162b are magnetized to form a composite magnetic field aligned in the 45-degree direction as a whole.
The second pole pieces 162a and 162b also serve to erase a reverse magnetic field of the composite magnetic field aligned in the 45-degree direction caused by the first pole pieces 161a to 161d.
Also in the present embodiment, it is preferable that the three conditions (1) to (3) described above be satisfied.

### [Others]

Though the embodiments of the present invention have been described, the present invention is not limited to these embodiments, but various alterations, additions, etc. can be made without departing from the spirit of the invention. For example, in the embodiments described above, the rotating magnet 12 having a bar shape is attached to an end of the rotary shaft 11, and the rotation angle detecting element unit 13 is disposed near the rotating magnet 12. However, the present invention is not limited to this, but can be applied also to an embodiment where the rotating magnet is attached to the rotary shaft 11 at any other places than its end. For example, the present invention can be applied to an embodiment where the rotary shaft 11 is fitted therearound with a ring-shaped magnet, and the rotation angle detecting element unit 13 is disposed near this ring-shaped magnet. That is, it is enough that the magnetic detecting element and the multipolar auxiliary magnet according to the present invention be disposed within a rotating homogeneous magnetic field formed by the rotating magnet.

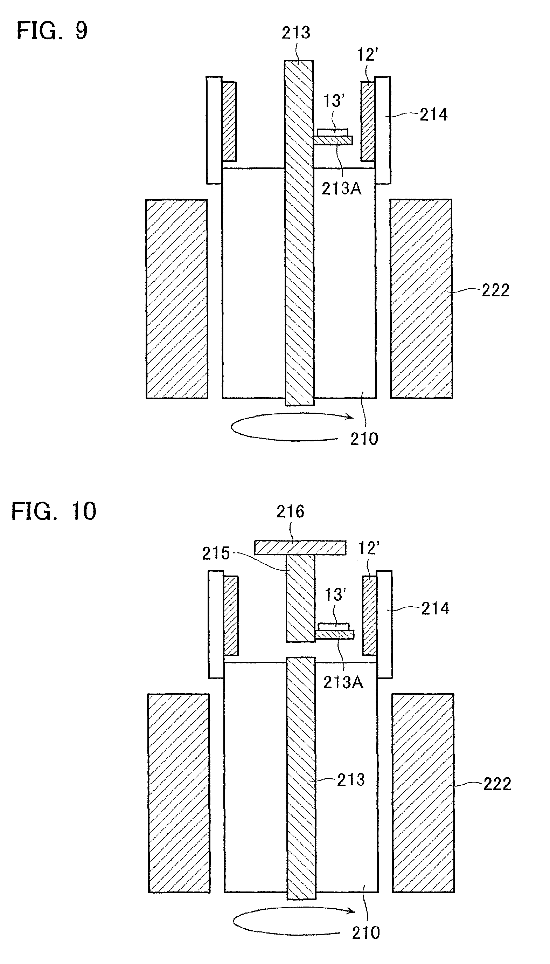

That being said, it is preferable from the viewpoint of a more accurate rotation angle detection that the magnetic detecting element and the multipolar auxiliary magnet be disposed in a homogeneous magnetic field formed by the rotating magnet. Fig. 9 shows an example in which a rotating magnetic field caused by a rotating magnet 12' having a ring shape is a homogeneous magnetic field, and a rotation angle detecting element unit 13' is disposed in this homogeneous magnetic field. A rotor 210 is configured to be rotatable about a fixed shaft 213, and the ring-shaped rotating magnet 12' is fitted on the inner wall of a metallic ring 214 (a shielding member) having a hollow tubular shape and attached to an axial end of the rotor 210. The rotor 210 is rotatable about the fixed shaft 213 by being supplied with a rotation drive force from a stator 222. The rotation angle detecting element unit 13' is the same as the rotation angle detecting element unit 13 of the embodiments described above, and mounted on a fringe 213a formed on the circumference of the fixed shaft 213. The fixed shaft 213 and the metallic ring 214 are both made of a metal having a high magnetic permeability (e.g., iron (Fe)). This allows the ring-shaped rotating magnet 12' to form a homogeneous magnetic field in the space between the fixed shaft 213 and the metallic ring 214.

When the rotation angle detecting element unit 13 is disposed in a homogeneous magnetic field, fluctuations, etc. of the detected angle due to vibration, etc. of the rotating members can be suppressed as compared with when it is disposed in a divergent magnetic field. Hence, the configuration of Fig. 9 can improve the detecting accuracy, compared with the configuration of Fig. 1. Further, the metallic ring 214 made of a metal having a high magnetic permeability screens, for example, a disturbance magnetic field from the stator 222 or the like, enabling the homogeneous magnetic field to be maintained without being influenced by the disturbance magnetic field.

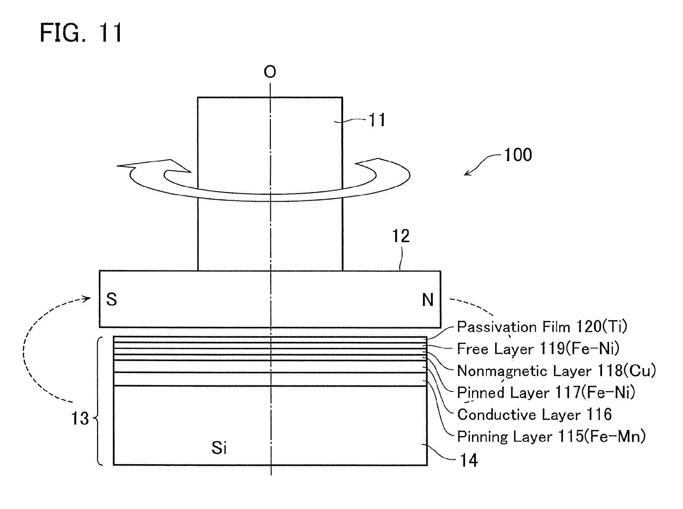

Needless to say, the configuration for forming a homogeneous magnetic field needs not be the configuration shown in Fig. 9, but may be embodied in various manners. For example, in Fig. 9, a homogeneous magnetic field is formed between the fixed shaft 213 and the metallic ring 214. However, the present invention is not limited to this, but the same effect can be achieved by means of an iron piece 215 (fixed on a fixing section 216) provided separately from the fixed shaft 213. Fig. 11 shows a modified example of the rotation angle detecting device 100 according to the first embodiment, in which a GMR sensor is used instead of an AMR effect detecting element as the magnetic detecting element. That is, the rotation angle detecting element unit 13 of this modified example includes a pinning layer 15, a conductive layer 16, a pinned layer 17, a nonmagnetic layer 18, a free layer 19, and a passivation film 20 on a silicon substrate 14. In this example, the pinning layer 17, the nonmagnetic layer 18, and the free layer 19 form a GMR sensor (Giant Magneto Resistive Sensor) as one example of magnetic detecting element. The GMR sensor is disposed in the rotating magnetic field generated by the rotating magnet 12 and outputs a signal corresponding to the amount of rotation of the rotating magnet 12. The pinning layer 15 is made of an antiferromagnetic material such as Fe-Mn alloy, and fixedly magnetized in a certain direction. The conductive layer 16 is a layer in which the quadrupole auxiliary magnet 160 shown in Fig. 2A is formed. The pinned layer 17 is made of a ferromagnetic material such as Fe-Ni alloy, and fixedly magnetized in a direction along the direction of magnetization of the pinning layer 15. The nonmagnetic layer 18 is made of, for example, copper (Cu). The free layer 19 is made of, for example, Fe-Ni alloy or the like, and configured such that the direction in which it is magnetized changes as the rotating magnet 12 rotates. The passivation film 20 is made of, for example, titanium (Ti) or the like, and has a function of protecting the free layer 19, etc. By replacing the AMR effect detecting element with a GMR sensor, it becomes possible to obtain twice as wide a rotation angle detection range as that obtained when an AMR effect detecting element is used. Other than this, though not illustrated, a magnetoresistive effect element such as a TMR sensor, a CMR sensor, etc. may be included in the device, as described above. It is also possible to use two types of magnetic detecting elements by, for example, forming an AMR effect detecting element as shown in Fig. 1 and a GMR sensor as shown in Fig. 11 so as to be stacked on one silicon substrate.

### DESCRIPTION OF REFERENCE NUMERALS

- 11: rotary shaft
- 12: rotating magnet
- 13: rotation angle detecting element unit
- 14: silicon substrate 14
- 15: pinning layer
- 16: conductive layer
- 17: pinned layer
- 18: nonmagnetic layer
- 19: free layer
- 20: passivation layer
- 160: quadrupole (multipolar) auxiliary magnet
- 161: radial magnet section
- 162: demagnetizing magnet section

## Claims

1. A rotation angle detecting device, comprising:
a rotating magnet attached on a detecting target and operative to rotate together with the detecting target to generate a rotating magnetic field;
a magnetic detecting element disposed in the rotating magnetic field generated by the rotating magnet; and
a multipolar auxiliary magnet located near the magnetic detecting element and configured to generate a composite rotating magnetic field of 0 to x degrees (x≤180) from a rotating magnetic field of 0 to 360 degrees caused by the rotating magnet in a region where the magnetic detecting element is disposed,
the multipolar auxiliary magnet including:
a plurality of first pole pieces arranged radially; and
second pole pieces inserted between the first pole pieces for erasing a reverse magnetic field directed to a reverse direction of a composite magnetic field obtained by combining magnetic fields each generated by the plurality of first pole pieces.

2. The rotation angle detecting device according to claim 1,
wherein each of the second pole pieces has substantially a same area as each of the first pole pieces, and a side of each of the first pole pieces at an outer end forms an obtuse angle with a side of the second pole piece adjacent thereto.

3. The rotation angle detecting device according to claim 1,
wherein the second pole pieces have a vertex having an acute angle in the radial direction.

4. The rotation angle detecting device according to claim 1,
wherein the magnetic detecting element is disposed in a homogeneous magnetic field formed by the rotating magnet.

5. The rotation angle detecting device according to claim 1,
wherein the rotating magnet is covered with a shielding member.

6. The rotation angle detecting device according to claim 1,
wherein the first pole pieces and the second pole pieces are formed by collecting stripe-shaped magnet thin film layers such that their longer direction extends in the radial direction.

7. The rotation angle detecting device according to claim 1, further comprising:
a rotor attached rotatably;
a stator configured to supply a rotation drive force to the rotor;
a shielding member having a hollow tubular shape and attached to one end of the rotor; and
a fixed metallic piece fixedly disposed inward of the shielding member,
wherein the rotating magnet is disposed to adjoin an inner wall of the shielding member so as to be disposed rotatable together with the rotor, and
the magnetic detecting element and the multipolar auxiliary magnet are fixedly disposed in a homogeneous magnetic field formed between the shielding member and the fixed metallic piece.
